# DEMANDE DE BREVET EUROPEEN

(11) **EP 3 919 249 A1**
(43) Date de publication de la demande: **08.12.2021**
(21) Numéro de dépôt: 21177724.8
(22) Date de dépôt: 04.06.2021
(51) Int. Cl.: B29C 33/44, B29C 45/44, B29C 45/26, B29C 33/42, A01G 9/02

(54) **DISPOSITIF ET PROCEDE POUR LA FABRICATION D'UN OBJET EN MATIERE PLASTIQUE**

(30) Priorité: 04.06.2020 FR 2005840
(71) Demandeur: Poetic, 71370 Saint Germain du Plain (FR)
(72) Inventeur: BOUILLARD, Victor, 71100 Chalon sur Saone (FR); LAURENT, Evelyne, 71100 Chalon sur Saone (FR); PAYEN, Arnaud, 71370 L'Abergement Sainte Colombe (FR); CHAUSSAT, Pascal, 71100 TOURNUS (FR); BEJOT, Samuel, 71380 Saint Marcel (FR)
(74) Mandataire: Be IP

(57) **Abrégé**

La présente invention concerne dispositif de moulage d'un objet en matière plastique et son procédé de moulage associé, le dispositif comprenant des blocs fixe (1) et mobile (2) délimitant une cavité de moulage (4) conçue pour recevoir la matière plastique lorsqu'il sont assemblés, au moins l'une des faces de la cavité incluant une pluralité de d'irrégularités ayant des axes de propagation non parallèles à la direction de déplacement.

## Description

### DOMAINE DE L'INVENTION

La présente invention concerne le domaine technique général des dispositifs et des procédés de moulage - notamment par injection, extrusion-soufflage et rotomoulage - d'un objet en matière plastique, comme par exemple :
- un récipient - tel qu'une jardinière ou un pot - incluant :
   ∘ un fond, et
   ∘ au moins une cloison latérale périphérique,
- un élément mobilier (monobloc ou composé de plusieurs pièces en matière plastique assemblés pour former l'élément mobilier) tel qu'une chaise ou une table de salon de jardin,
- ou tout autre pièce en matière plastique connu de l'homme du métier pour laquelle une esthétique (aspect visuel) et/ou une propriété technique (comme l'adhérence) spécifique est recherchée.

Dans la suite de la description, l'invention sera décrite en référence à la fabrication d'un récipient destiné à la décoration de balcons ou de terrasses, étant entendu que le dispositif et le procédé décrits dans la suite peuvent être utilisés pour la fabrication de tout autre type d'objet en matière plastique.

### ARRIERE PLAN DE L'INVENTION

Il existe de nombreux procédés dits de « *moulage par injection* » permettant de fabriquer un objet en matière plastique.

En choisissant convenablement la résine thermoplastique de base (il s'agit en général de polypropylène ou d'un polyéthylène) il est possible d'obtenir des pièces dont le prix de revient est relativement faible, et qui présentent toutes les caractéristiques mécaniques propres à leur utilisation.

Les pièces obtenues à partir de tels procédés de moulage par injection peuvent être :
- colorées, si un additif de coloration est ajouté à la résine thermoplastique, ou
- translucides, si aucun additif de coloration n'est ajouté à la résine thermoplastique.

Du fait de la nature même de la matière plastique, les pièces obtenues à partir de ces procédés ont un aspect peu naturel, relativement brillant et lisse, qui conduit parfois les utilisateurs à préférer des pièces identiques réalisées dans d'autres matériaux plus naturels tels que la terre cuite, le bois ou le métal.

Pour obtenir des pièces présentant un aspect plus naturel, il a déjà été proposé d'ajouter un additif naturel - tel que de la sciure de bois - à la résine thermoplastique (cf. FR 2 413 205).

Toutefois, l'ajout d'un additif naturel à la résine thermoplastique peut nuire aux qualités mécaniques de certaines pièces moulées, en particulier des chaises ou des tables de mobilier de jardin, et réduire la recyclabilité de la matière en fin de vie « polluée » par cette charge végétale.

Par ailleurs, la seule présence de marbrures ne suffit pas à donner à des pièces plastiques l'aspect du bois. En effet, même si ces marbrures donnent une coloration irrégulière, la pièce garde un toucher relativement lisse et un aspect global relativement brillant et peu naturel.

Un but de la présente invention est de proposer un dispositif et un procédé de moulage d'un objet en matière thermoplastique permettant, de manière économique et à cadence élevée, de remédier à au moins l'un des inconvénients précités.

Notamment, un but de l'invention est de proposer un dispositif et un procédé permettant de fabriquer une pièce en matière plastique présentant :
- une coloration irrégulière,
- une planéité irrégulière,
ces colorations et planéités donnant un aspect plus naturel à l'objet ainsi fabriqué, et étant susceptibles de différer d'une pièce à l'autre.

### BREVE DESCRIPTION DE L'INVENTION

A cet effet, l'invention propose un dispositif de moulage pour la fabrication d'un objet en matière plastique, le dispositif comprenant :
- un bloc fixe comportant une première demi-empreinte incluant au moins une face,
- un bloc mobile comportant une deuxième demi-empreinte incluant au moins une face,
- des moyens de déplacement pour déplacer en translation le bloc mobile relativement au bloc fixe selon une direction de déplacement parallèle à un axe de démoulage A-A' de l'objet fabriqué,
les blocs fixe et mobile étant jointifs au niveau d'un plan de joint, et les première et deuxième demi-empreintes délimitant une cavité de moulage conçue pour recevoir la matière plastique,
**remarquable en ce que**
le dispositif de moulage comprend en outre une pluralité d'irrégularités choisies parmi des trous borgnes et/ou des aspérités, lesdites irrégularités étant ménagées dans au moins l'une des faces de la première demi-empreinte ou de la deuxième demi-empreinte, chaque irrégularité ayant un axe de propagation T-T' non parallèle à la direction de déplacement.

Chaque trou borgne (respectivement aspérité) permet la formation d'une indentation (respectivement d'une lumière non-traversante) sur la face de l'objet, chaque indentation (respectivement lumière) étant destinée à être écrasée/arrachée sur le bord de son trou borgne associé (respectivement de son aspérité associée) lors du déplacement en translation du bloc mobile entre une position fermée dans laquelle le bloc mobile est en contact avec le bloc fixe, et une position ouverte dans laquelle le bloc mobile est distant du bloc fixe.

Ainsi, les inventeurs proposent de disposer des formes positives (aspérités) et/ou des formes négatives (trous borgnes) dans une (ou plusieurs) des parois du dispositif de moulage, ces formes s'étendant (vers l'intérieur du dispositif de moulage pour les trous borgnes / vers l'extérieur du dispositif de moulage pour les aspérités) selon une direction T-T' formant un angle de dépouille négatif avec la direction d'ouverture A-A' du dispositif de moulage.

Ainsi dans le cas de formes négatives, chaque indentation de matière contenue dans un trou borgne respectif forme une « *contre-dépouille élémentaire »* et tend à augmenter l'adhérence de l'objet fabriqué sur la (les) paroi(s) du moule lors de l'opération de démoulage. Dans le cas de formes positives, ce sont les aspérités (définissant les lumières non-traversantes) qui tendent à augmenter l'adhérence de l'objet fabriqué sur la (les) paroi(s) du moule lors de l'opération de démoulage.

Ceci va à rencontre de tous les enseignements fournis à l'homme du métier concernant la notion d'angle de dépouille (ou « *dépouille »),* qui consiste à prévoir une inclinaison des parois du dispositif de moulage relativement à la direction d'extraction de l'objet fabriqué - on évite ainsi les surfaces parallèles à la direction d'extraction - pour limiter le phénomène d'adhérence et faciliter le démoulage (l'angle de dépouille est généralement compris entre 3 et 5 degrés pour les familles de matière Polypropylène (PP) et Polyéthylène (PE)).

Lors de l'extraction de l'objet fabriqué, les indentations de matière contenues dans les trous borgnes (respectivement les aspérités définissant les lumières non-traversantes) s'écrasent contre la (ou les) paroi(s) du dispositif de moulage, ce qui induit ponctuellement une variation de la couleur (blanchiment) et de la forme (épatement) des indentations (respectivement des lumières non-traversantes).

On obtient ainsi un objet en matière plastique incluant :
- des indentations de formes variables s'étendant vers l'extérieur de la face de l'objet, et/ou
- des lumières non-traversantes s'étendant vers l'intérieur de la face de l'objet,
les indentations et/ou les bords des lumières non-traversantes ayant une couleur différente de la couleur de la face de la pièce.

La présence de ces irrégularités à la surface de la pièce en matière plastique donne un aspect plus naturel à l'objet ainsi fabriqué.

Des aspects préférés mais non limitatifs du dispositif de moulage selon l'invention sont les suivants :
- l'axe de propagation T-T' de chaque irrégularité forme, avec l'axe de démoulage A-A', un angle de dépouille négatif strictement inférieur à 0°, de sorte à former :
   ∘ pour les irrégularités consistant en des trous borgnes, des indentations de matière constituant des contre-dépouilles élémentaires sur l'objet,
   ∘ pour les irrégularités consistant en des aspérités, des lumières non-traversantes, le bord de chaque lumière non-traversante étant destiné à frotter sur l'aspérité associée à ladite lumière ;
- au moins une face de la première demi-empreinte et/ou de la deuxième demi-empreinte présente un angle de dépouille compris entre 0.5° et 40° relativement à l'axe de démoulage A-A', ladite face incluant des irrégularités, chaque irrégularité s'étendant selon une direction formant un angle compris entre 70 et 90° avec un plan tangent à la face au niveau de ladite irrégularité ;
- avantageusement :
   ∘ pour les irrégularités consistant en des trous borgnes, la profondeur de chaque irrégularité est comprise entre 50µm et 5mm, préférentiellement entre 100µm et 2mm, et encore plus préférentiellement entre 300µm et 1.5mm,
   ∘ pour les irrégularités consistant en des aspérités, la hauteur de chaque irrégularité est comprise entre 50µm et 5mm, préférentiellement entre 100µm et 2mm, et encore plus préférentiellement entre 300µm et 1.5mm ;
- au moins une irrégularité consiste en un trou borgne ayant un profil en puits à bords saillants, par exemple tel que la pente entre chaque paroi du trou borgne et la face sur laquelle il est ménagé est supérieure à 100% ;
- au moins deux irrégularités ont un critère de ressemblance différent, ledit critère de ressemblance étant choisi parmi une forme, un profil et une dimension ;
- au moins deux irrégularités de la pluralité ont des formes différentes ;
- au moins deux irrégularités de la pluralité ont des profondeurs ou des hauteurs différentes ;
- le dispositif peut comprendre en outre au moins un canal d'amené de matière dont l'extrémité débouchant dans la cavité de moulage définit un point d'injection, la profondeur/hauteur de chaque irrégularité variant en fonction de la distance entre ladite irrégularité et le point d'injection.

L'invention concerne également un procédé de moulage pour la fabrication d'un objet en matière plastique à partir d'un dispositif de moulage tel que décrit ci-dessus, ***remarquable en ce que*** le procédé comprend les étapes suivantes :
- Jonction des blocs fixe et mobile au niveau du plan de joint pour définir la cavité de moulage conçue pour recevoir la matière plastique,
- Injection de la matière plastique dans la cavité de moulage,
- Ouverture du dispositif de moulage, ladite étape d'ouverture comprenant le déplacement en translation du bloc mobile entre :
   ∘ une position fermée dans laquelle le bloc mobile est en contact avec le bloc fixe, et
   ∘ une position ouverte dans laquelle le bloc mobile est distant du bloc fixe, ledit déplacement induisant l'écrasement d'indentations formés dans les trous borgnes,
- Éjection de l'objet fabriqué.

L'invention concerne également un objet en matière plastique susceptible d'être fabriqué en mettant en œuvre le procédé décrit ci-dessus, ***remarquable en ce qu'il*** comprend une pluralité d'indentations écrasées sur au moins une de ses faces et/ou une pluralité de lumières non-traversantes à bords écrasés sur au moins une de ses faces.

### BREVE DESCRIPTION DES DESSINS

D'autres avantages et caractéristiques de l'invention ressortiront mieux de la description qui va suivre de plusieurs variantes d'exécution, données à titre d'exemples non limitatifs, à partir des dessins annexés sur lesquels :
- La figure 1a illustre schématiquement un exemple de dispositif de moulage en position ouverte,
- La figure 1b illustre schématiquement le dispositif de moulage en position fermée,
- La figure 2a illustre schématiquement un premier exemple de trou borgne pouvant être réalisé dans une paroi du dispositif de moulage de la figure 1a,
- La figure 2b illustre schématiquement un deuxième exemple de trou borgne pouvant être réalisé dans la paroi du dispositif de moulage de la figure 1a,
- La figure 3 est une représentation schématique partielle d'une face du dispositif de moulage incluant des trous borgnes,
- La figure 4 illustre schématiquement les étapes d'un procédé de moulage d'un objet en matière plastique,
- La figure 5 illustre un exemple d'objet en matière plastique obtenu en mettant en œuvre le procédé illustré à la figure 4.

### DESCRIPTION DETAILLEE DE L'INVENTION

On va maintenant décrire différents exemples de dispositif et de procédé de moulage d'un objet en matière plastique. Dans ces différentes figures, les éléments équivalents sont désignés par la même référence numérique.

### 1. Dispositif de moulage

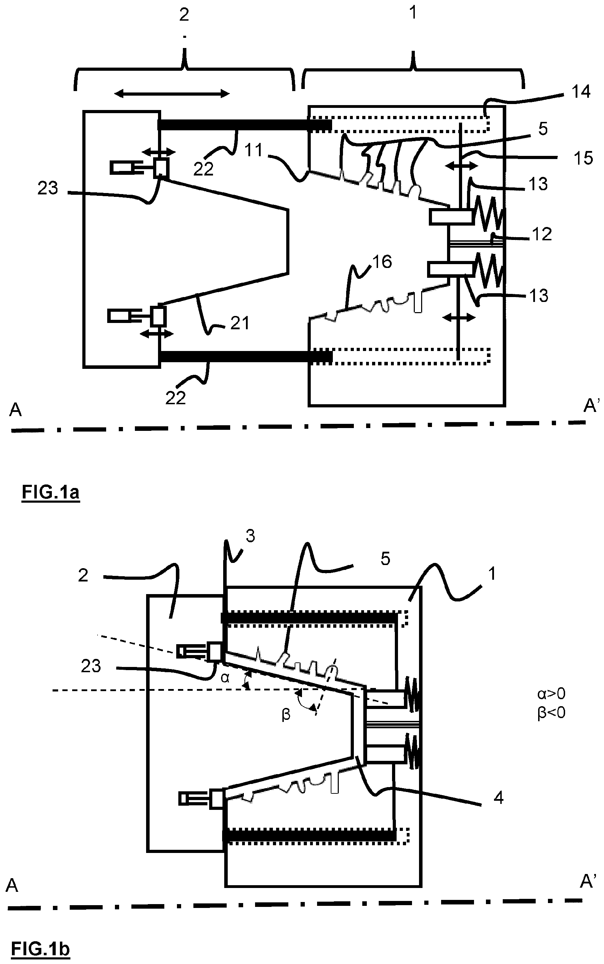

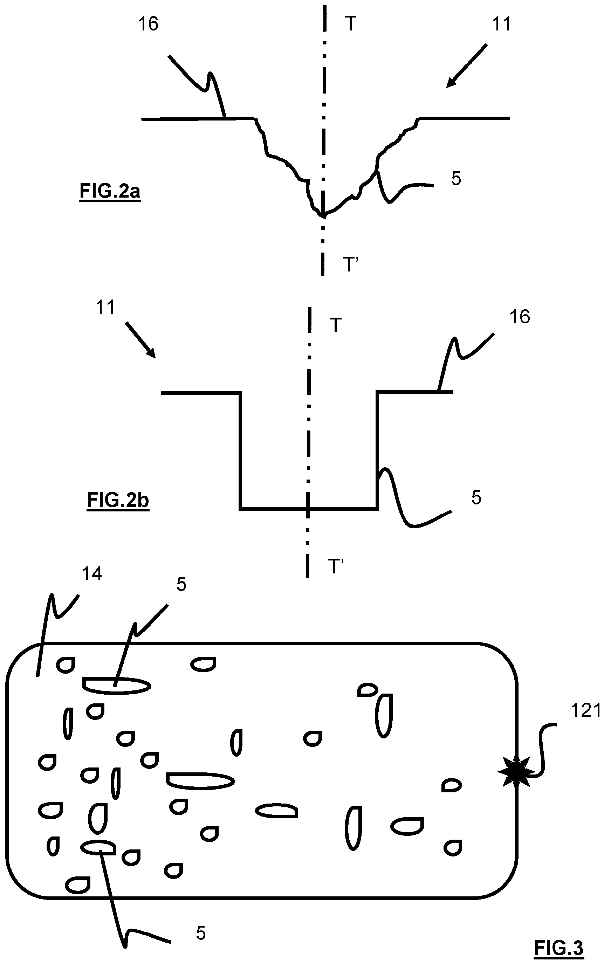

En référence aux figures 1a, 1b, 2a et 2b, le dispositif de moulage comprend :
- un bloc fixe 1 incluant une première demi-empreinte 11, et
- un bloc mobile 2 incluant une deuxième demi-empreinte 21, et étant apte à se déplacer entre :
   ∘ une position ouverte dans laquelle les blocs fixe et mobile 1, 2 sont distants l'un de l'autre (cf. figure 1a), et
   ∘ une position fermée dans laquelle les blocs fixe et mobile 1, 2 sont en contact l'un avec l'autre (cf. figure 1b),
- des moyens de déplacement (non représentés) du bloc mobile 2 entre les position ouverte et fermée (tels qu'un (ou plusieurs) moteur(s), et/ou un (ou plusieurs) vérin(s) hydraulique(s) ou pneumatique(s) ou électrique(s), etc.).

Les blocs fixe et mobile 1, 2 sont destinés à coopérer ensemble pour définir un *« volume* » correspondant à l'objet à fabriquer. Plus précisément dans la position fermée, les blocs fixe et mobile 1, 2 sont jointifs au niveau d'un plan de joint 3, de sorte que les première et deuxième demi-empreintes 11, 21 délimitent une cavité de moulage 4 dans laquelle la matière plastique est injectée pour fabriquer l'objet.

La cavité de moulage 4 présente un axe de démoulage A-A' s'étendant sensiblement parallèlement à une direction de déplacement du bloc mobile 2 pour passer de la position ouverte (respectivement fermée) à la position fermée (respectivement ouverte).

Pour faciliter le démoulage de l'objet fabriqué, le dispositif peut également comprendre des moyens de dégagement disposés sur l'un et/ou l'autre des blocs fixe et mobile 1, 2, et permettant d'expulser l'objet suivant l'axe de démoulage A-A' (parallèlement à la direction d'ouverture du bloc mobile 2). Ces moyens de dégagement peuvent notamment comprendre des écarteurs 13 et/ou des éjecteurs mécaniques 23, comme décrit ci-dessous.

De préférence, les faces des première et deuxième demi-empreintes 11, 21 présentent chacune un angle α positif non nul relativement à l'axe de démoulage A-A'. En effet pour les faces des première et deuxième demi-empreintes 11, 21, on évite les surfaces parallèles à la direction de démoulage A-A' ; elles en diffèrent d'un angle appelé *« dépouille* » pouvant varier de 3 à 5 degrés.

### 1.1. Bloc fixe

Le bloc fixe 1 comporte un (ou plusieurs) conduit(s) d'amené de fluide 12. Ce(s) conduit(s) d'amené 12 permet(tent) l'injection de matière plastique dans la cavité de moulage 4 lorsque les blocs fixe et mobile 1, 2 sont assemblés.

L'une des extrémités du conduit d'amené 12 débouche dans une face de la première demi-empreinte 11. Cette extrémité définit le point d'injection 121 au niveau duquel la matière plastique est introduite dans la cavité de moulage 4. Un tel (de tels) conduit(s) d'amené 12 étant connu(s) de l'homme du métier, il(s) ne sera (seront) pas décrit(s) plus en détails dans la suite.

Le bloc fixe 1 peut également comporter un (ou plusieurs) écarteur(s) 13 permettant d'appliquer une force de poussée tendant à dégager l'objet de la première demi-empreinte 11 lorsque le bloc mobile 2 se déplace de la position fermée (figure 1b) vers la position ouverte (figure 1a). Ceci permet de maintenir l'objet à fabriquer contre la deuxième demi-empreinte 21 lors du déplacement du bloc mobile 2 vers la position ouverte (figure 1a).

Avantageusement, le nombre et la répartition des écarteurs 13 sont déterminés de manière à assurer une pression faible au niveau de leurs points de contact avec l'objet à fabriquer. Cette répartition de la force de poussée totale en plusieurs forces de poussée faibles permet d'éviter tout flambage de l'objet à fabriquer lors du déplacement du bloc mobile 2 vers la position ouverte. De plus chaque écarteur 13 est agencé de sorte à maintenir une direction de la force de poussée aussi parallèle que possible à l'axe de démoulage A-A'.

Chaque écarteur 13 est apte à se déplacer entre :
- une position escamotée dans laquelle l'écarteur 13 est logé dans le bloc fixe 1 et affleure au niveau de la première demi-empreinte 11 (figure 1b),
- une position dégagée dans laquelle l'écarteur 13 s'étant en saillie vers l'extérieur de la première demi-empreinte 11 (figure 1a).

Chaque écarteur 13 consiste par exemple en une tige coulissante montée sur un ressort. Le déplacement de chaque écarteur 13 entre les positions escamotée et dégagée peut être assuré par un (ou plusieurs) bras 22 monté(s) sur le bloc mobile 2 et adapté(s) pour coulisser dans un canal de guidage 14 (respectif) ménagé dans le bloc fixe 1.

En référence aux figures 1a et 1b, le principe de fonctionnement de tels bras 22 est le suivant.

Lorsque le bloc mobile 2 se déplace de la position ouverte (figure 1a) vers la position fermée (figure 1b), les bras 22 coulissent dans les canaux de guidage 14 et viennent en contact avec des surfaces d'appui 15 solidaires mécaniquement des écarteurs 13. Les forces appliquées par les bras 22 induisent le déplacement en translation des surfaces d'appui 15, ce qui entraine le déplacement des écarteurs 13 de la position dégagée vers la position escamotée.

Lorsque le bloc mobile 2 se déplace de la position fermée (figure 1b) vers la position ouverte (figure 1a), les bras 22 coulissent dans les canaux de guidage 14 et se dégagent des surfaces d'appui 15 solidaires mécaniquement des écarteurs 13. La force appliquée par le ressort de rappel de chaque écarteur 13 induit son déplacement en translation de la position escamotée vers la position dégagée.

Un tel (De tels) écarteur(s) 13 étant connu(s) de l'homme du métier, il(s) ne sera (seront) pas décrit(s) plus en détails dans la suite.

### 1.2. Bloc mobile

Comme illustré aux figures 1a et 1b, le bloc mobile 2 peut comprendre un (ou des) éjecteur(s) mécanique(s) 23 monté(s) sur la deuxième demi-empreinte 21, de telle façon qu'après injection et déplacement du bloc mobile 2 de la position fermée (figure 1b) vers la position ouverte (figure 1a), l'objet se démoule suivant l'axe de démoulage A-A' parallèle à la direction principale d'ouverture grâce à la force de poussée appliquée par l'éjecteur 23 (ou les éjecteurs 23).

Chaque éjecteur mécanique 23 peut comprendre un vérin dont le piston est apte à se déplacer entre :
- une position rétractée dans laquelle l'éjecteur 23 est logé dans le bloc mobile 2 et affleure au niveau de la deuxième demi-empreinte 21 (figure 1b), et
- une position déployée dans laquelle l'éjecteur 23 s'étant en saillie vers l'extérieur de la deuxième demi-empreinte 21 (figure 1a),
le piston étant dans la position rétractée lorsque le bloc mobile 2 est dans la position fermée, et étant dans la position déployée lorsque le bloc mobile 2 est dans la position ouverte.

De préférence, le nombre et la répartition des éjecteurs 23 sont déterminées de manière à assurer une pression faible au niveau de leurs points de contact avec l'objet à fabriquer. Cette répartition de la force de poussée totale en plusieurs forces de poussée faibles permet d'éviter tout flambage de l'objet à fabriquer lors du déplacement du bloc mobile 2 vers la position ouverte. De plus chaque éjecteur 23 est agencé de sorte à maintenir une direction de la force de poussée aussi parallèle que possible à l'axe de démoulage A-A'.

### 1.3. Trous borgnes

Avantageusement, la première demi-empreinte 11 et/ou la deuxième demi-empreinte 21 peut (peuvent) comprendre des trous borgnes 5. Ces trous borgnes 5 peuvent être agencés dans une (ou plusieurs) face(s) de chaque demi-empreinte 11, 21.

Chaque trou borgne 5 présente un axe de propagation T-T' choisi de sorte à former un angle de dépouille β négatif avec l'axe A-A' de démoulage. La matière injectée dans ces trous borgnes 5 forme des indentations de matière 7 s'étendant en saillie vers l'extérieur de la (ou des) paroi(s) de l'objet sur laquelle (lesquelles) ces indentations 7 sont agencées.

Ainsi, chaque indentation 7 contenue dans un trou borgne respectif-forme une « *contre-dépouille élémentaire »* et - tend à augmenter l'adhérence de l'objet sur la (ou les) paroi(s) de la première demi-empreinte 11 et/ou de la deuxième demi-empreinte 21.

Lors de l'ouverture du dispositif de moulage pour extraire l'objet fabriqué, les indentations 7 sont écrasées sur la (ou les) face(s) de la (ou des) demi-empreinte(s) incluant les trous borgnes 5. Plus précisément, chaque indentation « *racle* » sur les bords du trou borgne 5 qui lui est associé, ce qui tend à déformer et blanchir chaque indentation 7, et donne à l'objet fabriqué un aspect plus naturel du fait de ses texture et coloration inhomogènes.

Avantageusement, la forme et/ou les dimensions et/ou le profil des trous borgnes peuvent varier en fonction de l'application visée. On entend, dans le cadre de la présente invention :
- par « *forme* », l'aspect géométrique d'un trou borgne en vue de dessus (c'est-à-dire la configuration du trou borgne pour un observateur situé au droit du trou borgne)
- par « *profil* », l'aspect géométrique d'un trou borgne en section,
- par « *dimension »,* la longueur ou la largeur ou la profondeur du trou borgne.

Par ailleurs pour une application donnée, les trous borgnes d'une face du dispositif de moulage peuvent être tous identiques, ou différents. Plus précisément dans certains modes de réalisation, une même face d'une demi-empreinte peut comprendre différents types de trous borgnes 5, chaque type de trou borgne 5 ayant une forme et/ou une dimension et/ou un profil qui diffère(nt) des autres types de trous borgnes 5. Par exemple dans le mode de réalisation illustré aux figures 1a, 1b, la face latérale 16 (de la première demi-empreinte 11) comprend plusieurs types de trous borgnes (de formes/dimensions/profils différents) répartis de manière aléatoire le long de la face latérale 16. Ceci permet d'augmenter l'inhomogénéité des indentations 7 obtenues, ce qui augmente encore l'aspect naturel de l'objet fabriqué.

A titre indicatif, on a illustré aux figures 2a et 2b, deux exemples de profils de trous borgnes circulaires pouvant être ménagés sur une face d'une demi-empreinte. Dans le cas de la figure 2a, le trou borgne présente un profil dont la configuration est semblable à celle d'un cratère (c'est-à-dire que la pente entre les parois du trous bords et la face de la demi-empreinte est inférieure à 100% (angle inférieur à 45°). Dans le cas de la figure 2b, le trou borgne présente un profil dont la configuration à bords saillants est semblable à celle d'un puits (c'est-à-dire que la pente entre les parois du trou et la face de la demi-empreinte est supérieure à 100° (angle supérieur à 45°)). Une telle configuration en puits permet d'accentuer le phénomène d'écrasement de l'indentation et favorise son blanchiment et son épatement.

A tire indicatif également, on a illustré à la figure 3 en vue de dessus des trous borgnes ayant des formes et dimensions différentes et pouvant être ménagés sur une face d'une demi-empreinte. Le lecteur appréciera que dans ce mode de réalisation, la densité de trous borgnes varie en fonction de leur distance au point d'injection 121. En particulier, plus la distance entre le point d'injection 121 et une zone de la face est importante, plus le nombre de trous borgnes dans cette zone est important. Ceci permet de compenser l'effet de rétractation subi par la peau de l'objet fabriqué lors de son refroidissement dans le dispositif de moulage.

En variante à la variation de densité en fonction de la distance au point d'injection 121, chaque face peut comprendre des trous borgnes dont la profondeur varie en fonction de leur distance au point d'injection 121. En particulier, plus le trou borgne sera éloigné du point d'injection, plus sa profondeur sera importante. Ceci permet également de compenser l'effet de rétractation subi par la peau de l'objet fabriqué lors de son refroidissement dans le dispositif de moulage. De préférence, la profondeur de chaque trou borgne est comprise entre 50µm et 5mm, préférentiellement entre 100µm et 2mm, et encore plus préférentiellement entre 300µm et 1.5mm.

Le lecteur appréciera qu'il est difficile de maitriser avec précision le phénomène d'écrasement des indentations. En effet, celui-ci dépend de facteurs externes (température, hydrométrie, fluidité de la matière injectée, quantité de matière injectée, etc.) pouvant varier (de manière infinitésimale) entre deux objets fabriqués successivement. Ainsi, deux objets fabriqués successivement dans un même dispositif de moulage (et en utilisant le même mode opératoire) peuvent présenter des variations d'aspect au niveau des indentations, ce qui rend chaque objet fabriqué singulier. Ceci confère aux objets fabriqués un aspect plus artisanal.

### 2. Procédé de moulage

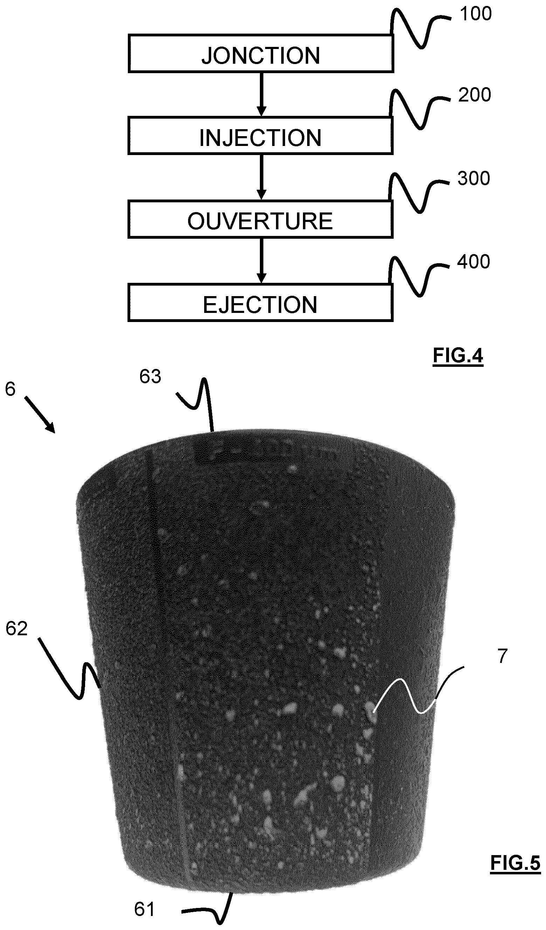

On va maintenant décrire le principe de fonctionnement du dispositif de moulage en référence au procédé de moulage illustré à la figure 4.

Pour la fabrication d'un nouvel objet, une première étape (100) du procédé consiste à joindre les blocs fixe et mobile 1, 2 pour définir la cavité de moulage 4 de l'objet.

Les éjecteur mécaniques 23 sont déplacés dans la position rétractée, et le bloc mobile 2 est déplacé en translation parallèlement à l'axe de démoulage A-A' de la position ouverte vers la position fermée.

Les bras du bloc mobile 2 coulissent dans le canal de guidage 14, viennent en contact avec les surfaces d'appui 15, et appliquent une force sur celles-ci tendant à déplacer les surfaces d'appui 15 en translation, ce qui déplace les écarteurs 13 de la position dégagée vers la position escamotée. Dans la position escamotée, les ressorts de rappel des écarteurs 13 sont comprimés.

Lorsque le bloc mobile 2 est dans la position fermée :
- les blocs fixe et mobile 1, 2 sont jointifs au niveau du plan de joint 3,
- les écarteurs sont dans la position escamotée, et
- les éjecteurs sont dans la position rétractée
de sorte que les première et deuxième demi-empreintes 11, 21 délimitent la cavité de moulage 4 de l'objet.

Dans une deuxième étape (200) du procédé, la matière (polypropylène + additif coloré) est injectée via le(s) conduit(s) d'amené 12. La matière se répand et remplit la cavité de moulage 4.

Une fois refroidie (par toute technique connue de l'homme du métier), le dispositif de moulage est ouvert (étape 300). Le bloc mobile 2 est déplacé de la position fermée vers la position ouverte. Les bras coulissent dans les canaux de guidage 14, et libèrent progressivement les surfaces d'appui 15. Du fait de la contrainte exercée par les ressorts de rappel, les surfaces d'appui (mécaniquement solidaires des écarteurs) se déplacent en translation selon la direction d'ouverture (parallèlement à l'axe de démoulage A-A'). Les écarteurs 13 se déplacent en translation selon l'axe de démoulage A-A', de la position escamotée vers la position dégagée.

Les forces de poussée appliquées par les écarteurs 13 sur l'objet tendent à écarter celui-ci de la première demi-empreinte 11 du bloc fixe 1 : l'objet se déplace en translation selon l'axe de démoulage A-A' (et reste fixé à la deuxième demi-empreinte 21 du bloc mobile 2). Lors du déplacement en translation de l'objet relativement au bloc fixe 1, les indentations de matière 7 raclent et s'écrasent sur les bords de leur trou borgne 5 associé, ce qui induit un épatement et un blanchiment des indentations 7.

Le bloc mobile se déplace selon l'axe A-A' jusqu'à la position ouverte.

Une fois dans la position ouverte, l'objet fabriqué est éjecté du dispositif de moulage (étape 400). Les éjecteurs mécaniques 23 sont déplacés de la position rétractée vers la position déployée. Les forces de poussée appliquées par les éjecteurs 23 sur l'objet tendent à éjecter celui-ci de la deuxième demi-empreinte 21 du bloc mobile 2 : l'objet se déplace en translation selon l'axe de démoulage A-A', et tombe en dehors du dispositif de moulage.

### 3. Récipient obtenu

On a illustré, à la figure 5, un exemple d'objet en matière plastique pouvant être obtenu en mettant en œuvre le dispositif et le procédé décrits précédemment.

Cet objet consiste en un récipient destiné à recevoir de la terre et des plantes constituant une composition florale décorative. Comme rappelé ci-dessus, il est bien évident pour l'homme du métier que le dispositif et le procédé décrits précédemment peuvent être utilisées pour réaliser d'autres pièces en matière plastique, notamment en fonction de la forme de la cavité de moulage délimitée par les première et deuxième demi-empreintes du dispositif de moulage.

En référence à la figure 5, le récipient 6 pour plante présente une forme tronconique. Bien entendu, le récipient pourrait présenter d'autres formes, par exemple une forme parallélépipédique, ou cylindrique, ou cubique, etc. en fonction de l'application visée.

Le récipient 6 peut être composé d'un (ou plusieurs) additif(s) coloré(s) et d'un matériau choisi parmi :
- une résine biosourcée ou dérivée de produits pétroliers, telle que du polypropylène (notamment recyclé),
- ou tout autre matière synthétique connue de l'homme du métier telle que du styrène acrylonitrile (SAN), du poly méthacrylate de méthyle (PMMA), un copolymère acrylique cristal, un copolymère de polyéthylène téréphtalate de glycol (PCTG).

Ce récipient 6 comprend un fond 61, une paroi latérale 62, une ouverture 63 dans sa partie supérieure opposée au fond 1.

Avantageusement, le fond 61 et la paroi latérale 62 sont monoblocs, de sorte que le récipient dans son ensemble peut être fabriqué en une étape de moulage unique à partir d'un seul dispositif de moulage. Ceci permet de limiter les coûts associés à la fabrication du récipient.

La paroi latérale 62 comprend une face externe incluant des indentations 7 épatées. Comme illustré à la figure 5, chaque indentation 7 présente une couleur plus claire que la couleur des zones de la face externe dépourvues d'indentations 7. Ceci est due au blanchiment des indentations 7 lors de l'extraction du récipient du bloc fixe du dispositif de moulage.

### 4. Conclusions

Le dispositif et le procédé de moulage décrits précédemment permettent d'obtenir un objet en matière plastique ayant un aspect naturel et artisanal et répétable, du fait de la présence des indentations (ou aspérités) de formes variables, et de couleur différente de la couleur principale de l'objet fabriqué (i.e. couleur des surfaces de l'objet dépourvues d'indentation).

Le lecteur aura compris que de nombreuses modifications peuvent être apportées à l'invention décrite précédemment sans sortir matériellement des nouveaux enseignements et des avantages décrits ici.

Par exemple dans la description qui précède, le dispositif de moulage comprenait à la fois des écarteurs sur le bloc fixe et des éjecteur mécaniques sur le bloc mobile. Il est bien évident pour l'homme du métier que dans certaines variantes de réalisation de l'invention, le dispositif de moulage peut comprendre uniquement des écarteurs, ou uniquement des éjecteurs mécaniques, voire être dépourvu d'écarteur et d'éjecteur, le démoulage de l'objet étant dans ce cas assuré grâce aux forces de frottement et de gravité.

Également dans la description qui précède, seule la demi-empreinte du bloc fixe comprenait des trous borgnes pour la formation d'indentations. Il est bien évident pour l'homme du métier que dans d'autres variantes, des trous borgnes peuvent être ménagés uniquement dans une (ou plusieurs) paroi(s) de la deuxième demi-empreinte du bloc mobile, voire à la fois dans une (ou plusieurs) parois des première et deuxième demi-empreintes.

De plus dans la description qui précède, le dispositif et le procédé de moulage était décrit en référence à la fabrication d'un objet en matière plastique par injection. Il est bien évident pour l'homme du métier que l'invention ne se limite pas à la fabrication d'objets par injection de matière plastique, mais s'applique de manière générale à la fabrication d'objet en matière plastique par extrusion, soufflage et rotomoulage.

Enfin dans la description qui précède, l'aspect naturel et artisanal et répétable de l'objet était obtenu grâce à des trous borgnes ménagés dans une (ou plusieurs) des faces de la première demi-empreinte et/ou de la deuxième demi-empreinte, chaque trou borgne ayant un axe de propagation non parallèle à la direction de déplacement du bloc mobile relativement au bloc fixe. Il est bien évident pour l'homme du métier qu'en complément (ou en remplacement) des trous borgnes permettant la formation d'indentations à la surface de l'objet, le dispositif de moulage peut comprendre des aspérités ménagées dans une (ou plusieurs) des faces de la première demi-empreinte et/ou de la deuxième demi-empreinte, chaque aspérité s'étendant en saillie selon un axe de propagation non parallèle à la direction de déplacement du bloc mobile relativement au bloc fixe.

Par conséquent, toutes les modifications de ce type sont destinées à être incorporées à l'intérieur de la portée des revendications jointes.

## Revendications

1. Dispositif de moulage pour la fabrication d'un objet en matière plastique, le dispositif comprenant :
∘ un bloc fixe (1) comportant une première demi-empreinte (11) incluant au moins une face,
∘ un bloc mobile (2) comportant une deuxième demi-empreinte (21) incluant au moins une face,
∘ des moyens de déplacement pour déplacer en translation le bloc mobile relativement au bloc fixe selon une direction de déplacement parallèle à un axe de démoulage (A-A') de l'objet fabriqué,
les blocs fixe et mobile (1, 2) étant jointifs au niveau d'un plan de joint (3), et les première et deuxième demi-empreintes (11, 21) délimitant une cavité de moulage (4) conçue pour recevoir la matière plastique,
**caractérisé en ce que**
le dispositif de moulage comprend en outre :
∘ au moins un canal d'amené (12) de matière dont l'extrémité débouchant dans la cavité de moulage (4) définit un point d'injection (121),
∘ une pluralité d'irrégularités choisies parmi des trous borgnes (5) et/ou des aspérités, lesdites irrégularités étant ménagées dans au moins l'une des faces de la première demi-empreinte (11) ou de la deuxième demi-empreinte (21), chaque irrégularité ayant un axe de propagation (T-T') non parallèle à la direction de déplacement, la profondeur/hauteur de chaque irrégularité variant en fonction de la distance entre ladite irrégularité et le point d'injection (121).

2. Dispositif de moulage selon la revendication 1, ***dans lequel*** l'axe de propagation (T-T') de chaque irrégularité forme, avec l'axe de démoulage (A-A'), un angle de dépouille négatif strictement inférieur à 0°, de sorte à former :
∘ pour les irrégularités consistant en des trous borgnes, des indentations de matière (7) constituant des contre-dépouilles élémentaires sur l'objet,
∘ pour les irrégularités consistant en des aspérités, des lumières non-traversantes, le bord de chaque lumière non-traversante étant destiné à frotter sur l'aspérité associée à ladite lumière.

3. Dispositif de moulage selon la revendication 1, ***dans lequel*** au moins une face de la première demi-empreinte (11) et/ou de la deuxième demi-empreinte (21) présente un angle de dépouille compris entre 0.5° et 40° relativement à l'axe de démoulage (A-A'), ladite face incluant des irrégularités, chaque irrégularité s'étendant selon une direction formant un angle compris entre 70 et 90° avec un plan tangent à la face au niveau de ladite irrégularité.

4. Dispositif de moulage selon l'une quelconque des revendications précédentes, ***dans lequel** :*
- pour les irrégularités consistant en des trous borgnes (5), la profondeur de chaque irrégularité est comprise entre 50µm et 5mm, préférentiellement entre 100µm et 2mm, et encore plus préférentiellement entre 300µm et 1.5mm,
- pour les irrégularités consistant en des aspérités, la hauteur de chaque irrégularité est comprise entre 50µm et 5mm, préférentiellement entre 100µm et 2mm, et encore plus préférentiellement entre 300µm et 1.5mm.

5. Dispositif de moulage selon l'une quelconque des revendications précédentes, ***dans lequel*** au moins une irrégularité consiste en un trou borgne (5) ayant un profil en puits à bords saillants, par exemple tel que la pente entre chaque paroi du trou borgne et la face sur laquelle il est ménagé est supérieure à 100%.

6. Dispositif de moulage selon l'une quelconque des revendications précédentes, ***dans lequel*** au moins deux irrégularités ont un critère de ressemblance différent, ledit critère de ressemblance étant choisi parmi une forme, un profil et une dimension.

7. Dispositif de moulage selon la revendication 6, ***dans lequel*** au moins deux irrégularités de la pluralité ont des formes différentes.

8. Dispositif de moulage selon l'une des revendications 6 ou 7, ***dans lequel*** au moins deux irrégularités de la pluralité ont des profondeurs ou des hauteurs différentes.

9. Procédé de moulage pour la fabrication d'un objet en matière plastique à partir d'un dispositif de moulage selon l'une quelconque des revendications 1 à 8, ***caractérisé en ce que*** le procédé comprend les étapes suivantes :
- Jonction (100) des blocs fixe et mobile (1, 2) au niveau du plan de joint (3) pour définir la cavité de moulage (4) conçue pour recevoir la matière plastique,
- Injection (200) de la matière plastique dans la cavité de moulage,
- Ouverture (300) du dispositif de moulage, ladite étape d'ouverture comprenant le déplacement en translation du bloc mobile entre :
∘ une position fermée dans laquelle le bloc mobile est en contact avec le bloc fixe, et
∘ une position ouverte dans laquelle le bloc mobile est distant du bloc fixe, ledit déplacement induisant l'écrasement d'indentations formés dans les trous borgnes,
- Éjection (400) de l'objet fabriqué.

10. Objet en matière plastique susceptible d'être fabriqué en mettant en œuvre le procédé selon la revendication 9, ***caractérisé en ce qu'il*** comprend une pluralité d'indentations écrasées sur au moins une de ses faces et/ou une pluralité de lumières non-traversantes à bords écrasés sur au moins une de ses faces.
